# EUROPEAN PATENT SPECIFICATION

(11) **EP 1 727 135 B1**
(45) Date of publication and mention of the grant of the patent: **31.12.2008**
(21) Application number: 06114010.9
(22) Date of filing: 16.05.2006
(51) Int. Cl.: G11B 7/00, G11B 7/095, G11B 20/10

(54) **Tilt Controller based on Distortion-Free Control Signals and an Optical Reproducing Apparatus Thereof**
Neigungscontroller basierend auf verzerrungsfreien Steuersignalen und eine optische Wiedergabevorrichtung dafür
Contrôleur d'inclinaison basé sur des signaux de commande sans distorsion et le dispositif de lecture optique associé

(30) Priority: 17.05.2005 KR 2005041120
(43) Date of publication of application: 29.11.2006
(73) Proprietor: SAMSUNG ELECTRONICS CO., LTD., Suwon-si, Gyeonggi-do (KR)
(72) Inventor: Lee, Myoung-wook, Yeongtong-gu, Gyeonggi-do, Suwon-si (KR); Otsuka, Tatsuhiro, Yeongtong-gu, Gyeonggi-do, Suwon-si (KR); Shim, Jae-seong, Dongan-du, Gyeonggi-do, Anyang-si (KR)
(74) Representative: Waddington, Richard

(56) References cited:
- US-A1- 2002 060 964
- US-A1- 2005 047 291

## Description

Aspects of the present invention relate to a tilt controller and an optical reproducing apparatus incorporating the tilt controller. More specifically, aspects of the present invention relate to a tilt controller controlling a tilt based on distortion-free control signals, and an optical reproducing apparatus incorporating the tilt controller.

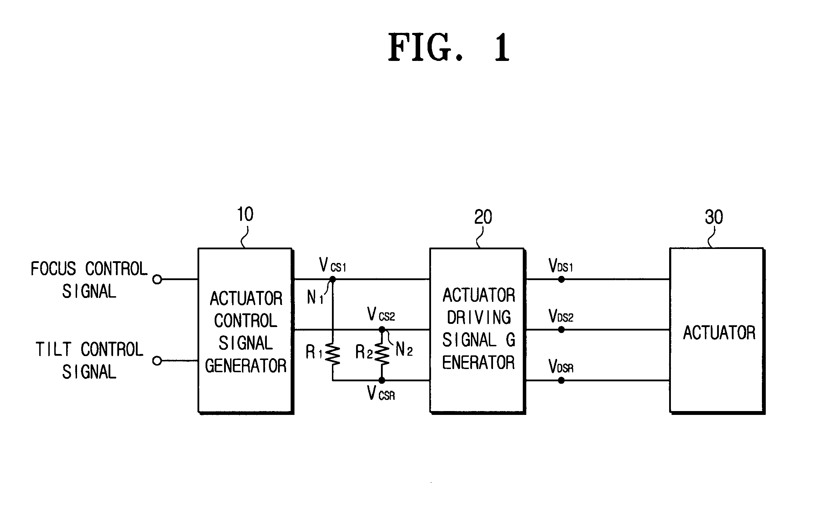

FIG. 1 is a view explaining a conventional tilt controller. Referring to FIG. 1, a conventional tilt controller includes an actuator control signal generator 10, a first resistor R₁, a second resistor R₂, an actuator driving signal generator 20, and an actuator 30.

The actuator control signal generator 10 generates and outputs a first control signal V_{CS1} at a node N1 and a second control signal V_{CS2} at a node N2, the signals being used for controlling an operation of the actuator 30, using a focus control signal and a tilt control signal.

The first and second resistors R₁ and R₂ generate and output a reference control signal V_{CSR} through voltage division of the first and second control signals, V_{CS1} and V_{CS2} output from the actuator control signal generator 10. The reference control signal V_{CSR} is a median voltage of the first control signal V_{CS1} and the second control signal V_{CS2} 1.

The actuator driving signal generator 20 generates and outputs a first driving signal V_{DS1}, a second driving signal V_{DS2}, and a reference driving signal V_{DSR}, the driving signals being used for driving the actuator 30, using the first control signal V_{CS1}, second control signal V_{CS2}, and reference control signal V_{CSR}.

The actuator 30 is driven according to the first, second, and reference driving signals V_{DS1}, V_{DS2} and V_{DSR} output from the actuator driving signal generator 20, and adjusts a tilt of a pickup (not shown) that reads the data recorded on optical discs.

As shown in FIG. 1, in order to generate the reference control signal V_{CSR} through voltage division of the first control signal V_{CS1} and the second control signal V_{CS2}, node N₁ is electrically connected to node N₂ through the first resistor R₁ and the second resistor R₂; thus, the first control signal V_{CS1} and the second control signal V_{CS2} are mutually affected. This is further intensified when a difference between the first control signal V_{CS1} and the second control signal V_{CS2} is large.

Since the first control signal V_{CS1} and the second control signal V_{CS2} are mutually affected, the first control signal V_{CS1} and the second control signal V_{CS2} may be distorted. An example is that, although the voltage of the first control signal V_{CS1} and the voltage of the second control signal V_{CS2} should be "2.52V" and "1.59V" respectively, the voltage of the first control signal V_{CS1} and the voltage of the second control signal V_{CS2} are distorted to "2.36V" (<"2.52") and "1.75V" (>"1.59"), respectively, due to the influence caused by the electrical connection betweens the nodes N₁ and N₂.

Where the first control signal V_{CS1} and the second control signal V_{CS2} are distorted, the driving signals V_{DS1}, V_{DS2} and V_{DSR} generated by the actuator driving signal generator 20 based on distorted signals V_{CS1} and V_{CS2} are also distorted. As a result, the tilt adjustment of the actuator 30 becomes inaccurate, so that the data recorded on optical discs cannot be read, or are inaccurately read.

US 2002/060964 discloses a tilt control method using measurement of maximum and minimum values of focus error and the generation of a tilt control reference voltage used by a driving signal generator to drive the actuator.

It is an object of the present invention to address the above and/or other problems.

The invention provides a tilt controller and an optical reproducing apparatus thereof, in which the tilt controller performs tilt control based on distortion-free control signals for more accurate tilt control by preventing the control signals used for controlling the operation of the actuator from being distorted, the actuator adjusting the tilt of a pickup.

According to the present invention there is provided an apparatus as set forth in the appended claims. Preferred features of the invention will be apparent from the dependent claims, and the description which follows.

According to an aspect of the invention a tilt controller comprises a control signal generator for generating a first control signal and a second control signal, the signals being used to control an operation of an actuator adjusting a tilt of a pickup that reads data recorded on an optical disc, a reference control signal generator for generating a reference control signal using the first control signal and the second control signal, a driving signal generator for generating signals used to drive the actuator using the first and second control signals generated by the control signal generator, and the reference control signal generated by the reference signal generator, a first control signal protector for preventing the first control signal from being distorted by the reference control signal generator, and a second control signal protector for preventing the second control signal from being distorted by the reference control signal generator.

Preferably, the first control signal protector is operable to prevent the first control signal from being changed by the reference control signal generator, and the second control signal protector is operable to prevent the second control signal from being changed by the reference control signal generator.

The first control signal protector may include a first voltage follower having an input connected with the first control signal and an output connected with a first terminal of the reference control signal generator, and the second control signal protector may include a second voltage follower having an input connected with the second control signal and an output connected with a second terminal of the reference control signal generator.

An optical reproducing apparatus according to an aspect of the invention comprises a pickup for reading data recorded on an optical disc, an actuator for adjusting a tilt of the pickup, a control signal generator for generating a first control signal and a second control signal, the signals being used to control an operation of an actuator for adjusting a tilt of a pickup that is operable to read the data recorded on the optical disc, a reference control signal generator for generating a reference control signal using the first control signal and the second control signal, a driving signal generator for generating signals used to drive the actuator using the first and second control signals generated by the control signal generator, and the reference control signal generated by the reference signal generator, a first control signal protector for preventing the first control signal from being distorted by the reference control signal generator, and a second control signal protector for preventing the second control signal from being distorted by the reference control signal generator.

Preferably, the first control signal protector is operable to prevent the first control signal from being changed by the reference control signal generator, and the second control signal protector is operable to prevent the second control signal from being changed by the reference control signal generator.

The first control signal protector may include a first voltage follower having an input connected with the first control signal and an output connected with a first terminal of the reference control signal generator, and the second control signal protector may include a second voltage follower having an input connected with the second control signal and an output connected with a second terminal of t the reference control signal generator.

Additional aspects and/or advantages of the invention will be set forth in part in the description which follows and, in part, will be obvious from the description, or may be learned by practice of the invention.

For a better understanding of the invention, and to show how embodiments of the same may be carried into effect, reference will now be made, by way of example, to the accompanying diagrammatic drawings in which:
FIG. 1 is a view explaining a conventional tilt controller;
FIG. 2 is a block diagram of a tilt controller according to an embodiment of the invention; and
FIG. 3 is a detailed block diagram of the tilt controller shown in FIG. 2.

Reference will now be made in detail to the present embodiments of the present invention, examples of which are illustrated in the accompanying drawings, wherein like reference numerals refer to the like elements throughout. The embodiments are described below in order to explain the present invention by referring to the figures.

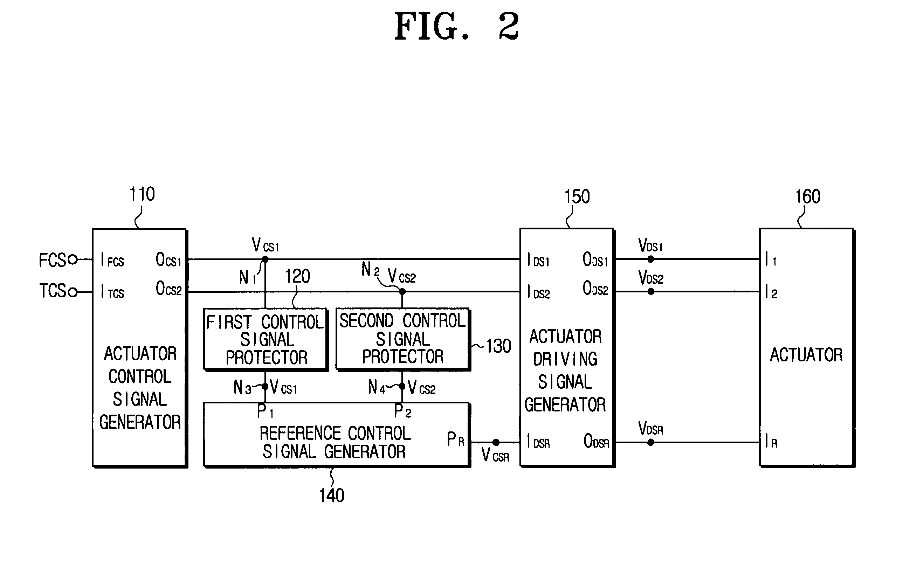

FIG. 2 is a block diagram of a tilt controller according to an embodiment of the invention. The tilt controller comprises an actuator control signal generator 110, a first control signal protector 120, a second control signal protector 130, a reference control signal generator 140, an actuator driving signal generator 150, and an actuator 160.

The actuator control signal generator 110 generates and outputs control signals, the signals being used to control an operation of the actuator 160, using a Focus Control Signal (FCS) received through a terminal I_{FCS} and a Tilt Control Signal (TCS) received through a terminal I_{TCS}.

The actuator control signal generator 110 generates a first control signal V_{CS1} output through a terminal O_{CS1} and a second control signal output through a terminal O_{CS2}.

The first control signal protector 120 is a protection circuit preventing the first control signal V_{CS1} from being distorted. Specifically, the first control signal protector 120 prevents a signal output from a terminal P₁ of the reference control signal generator 140 from flowing into a node N₁, thereby preventing a voltage of the first control signal V_{CS1} from being changed by the signal output at the terminal P₁.

The first control signal protector 120 enables a signal having a same voltage as a voltage of the first control signal V_{CS1} to be applied to the terminal P₁ of the reference control signal generator 140. That is, the first control signal protector 120 controls the voltage of the terminal P₁ of the reference control signal generator 140 (i.e., the voltage of a node N₃) to be the same as the voltage of the first control signal V_{CS1}.

The second control signal protector 130 is a protection circuit preventing the second control signal V_{CS2} from being distorted. Specifically, the second control signal protector 130 prevents a signal output from a terminal P₂ of the reference control signal generator 140 from flowing into a node N₂, thereby preventing a voltage of the second control signal V_{CS2} from being changed by the signal output at the terminal P₂.

The second control signal protector 130 enables a signal having a same voltage as a voltage of the second control signal V_{CS2} to be applied to the terminal P₂ of the reference control signal generator 140. That is, the second control signal protector 130 controls the voltage of the terminal P₂ of the reference control signal generator 140 (i.e., the voltage of a node N₄) to be the same as the voltage of the second control signal V_{CS2}.

The reference control signal generator 140 generates and outputs a reference control signal V_{CSR} using the signals V_{CS1} and V_{CS2} applied from the first control signal protector 120 and the second control signal protector 130. The reference control signal V_{CSR} generated by the reference control signal generator 140 is a median voltage of the voltage of the signal V_{CS1} applied from the first control signal protector 120 and the voltage of the signal V_{CS2} applied from the second control signal protector 130.

The actuator driving signal generator 150 generates and outputs driving signals to drive the actuator 160 using the first control signal V_{CS1} input through a terminal I_{DS1}, the second control signal V_{CS2} input through a terminal I_{DS2}, and the reference control signal V_{CSR} input through a terminal I_{DSR}.

The actuator driving signal generator 150 generates a first driving signal V_{DS1} output through a terminal O_{DS1}, a second driving signal V_{DS2} output through a terminal O_{DS2}, and a reference driving signal V_{DSR} output through a terminal O_{DSR}.

The actuator 160 is driven according to the first driving signal VDS1 input through a terminal I₁, the second driving signal VDS2 input through a terminal I₂, and the reference driving signal V_{DSR} input through a terminal I_{R}, and adjusts the tilt of a pickup (not shown) that reads the data recorded on an optical disc.

The driving signals V_{DS1}, V_{DS2} and V_{DSR} used for driving the actuator 160 are the signals generated by the actuator driving signal generator 150 using the control signals V_{CS1}, V_{CS2} and V_{CSR}. The first control signal V_{CS1} and the second control signal V_{CS2} are not distorted due to first and second control signal protectors 120, 130 preventing the first and second control signals V_{CS1} and V_{CS2}, respectively, from being distorted by t the reference control signal generator 140.

The first and second control signals V_{CS1} and V_{CS2}. are not distorted, and the driving signals V_{DS1}, V_{DS2} and V_{DS3} generated using the first and second control signals V_{DS1} and V_{DS2} are not distorted. Accordingly, the tilt of a pickup is more accurately adjusted by the actuator 160 that is driven by the distortion-free driving signals.

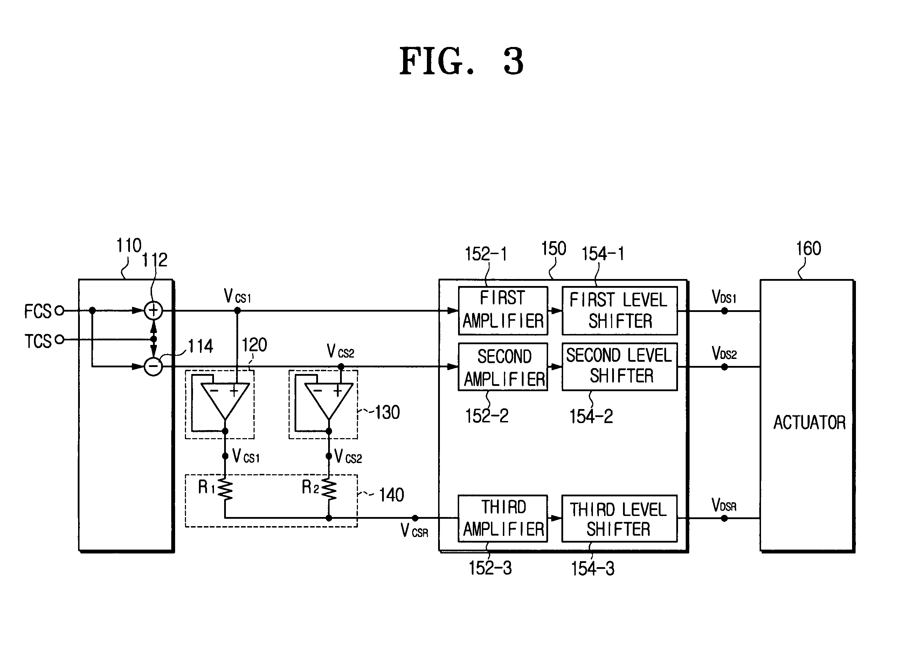

Hereafter, the tilt controller shown in FIG. 2 is explained in more detail with reference to FIG. 3. FIG. 3 is a detailed block diagram of the tilt controller shown in FIG. 2.

As shown in FIG. 3, the actuator control signal generator 110 includes an adder 112 and a subtracter 114. The adder 112 outputs an added signal (FCS + TCS) of the FCS and the TCS as the first control signal V_{CS1}. The subtracter 114 outputs a subtracted signal (FCS - TCS) of the FCS and the TCS as the second control signal V_{CS2}.

The first control signal protector 120 includes a first voltage follower 120 that is provided between an input terminal of a first amplifier 152-1 and an end point of a first resistor R₁ provided in the reference control signal generator 140.

The second control signal protector 130 includes a second voltage follower 130 that is provided between an input terminal of a second amplifier 152-2 and an end point of a second resistor R₂ provided in the reference control signal generator 140.

The output voltages of the voltage followers 120 and 130 are the same as the voltages of the first and second control signals V_{CS1}, V_{CS2}, respectively. The voltage followers 120 and 130 prevent the first and second control signals V_{CS1} and V_{CS2} from being distorted, i.e., the first and second control signals V_{CS1} and V_{CS2} from being changed due to a mutual interaction of the first and second control signals V_{CS1} and V_{CS2} within the reference control signal generator 140.

The reference control signal generator 140 includes a first resistor R₁ and a second resistor R₂, and generates the reference control signal V_{CSR} through voltage division. Where the first resistor R₁ and the second resistor R₂ have a same resistance, the voltage of the reference control signal V_{CSR} becomes a median voltage of the first and second control signals V_{CS1} and V_{CS2}.

The actuator driving signal generator 150 is implemented in the first and second amplifiers 152-1 and 152-2 and a third amplifier 152-3 amplifying the first, second, and reference control signals V_{CS1}, V_{CS2} and V_{CSR}, respectively, and first, second, and third level shifters 154-1, 154-2, 154-3 generating the first, second, and reference driving signals V_{DS1}, V_{DS2} and V_{DS3}, respectively, by shifting voltage levels of the signals amplified by the first, second and third amplifiers, 152-1, 152-2 and 152-3, respectively.

As explained above, a tilt controller provides more accurate tilt control of a pickup actuator by preventing control signals used for controlling the operation of the actuator from being distorted. Such a tilt controller may be applied to an optical reproducing apparatus that reads data recorded on an optical discs using a pickup.

As described above, according to aspects of the invention, distortions of control signals are prevented by protecting the control signals used for controlling the operation of an actuator that adjusts the tilt of a pickup. Accordingly, a tilt is controlled based on distortion-free control signals, thereby enhancing reproducing performance of the data recorded on the optical disc.

Although a few preferred embodiments have been shown and described, it will be appreciated by those skilled in the art that various changes and modifications might be made within the scope of the claims.

The invention is not restricted to the details of the foregoing embodiment(s).

## Claims

1. A tilt controller comprising:
a control signal generator (110) for generating a first control signal and a second control signal to control an actuator (160) adjusting a tilt of a pickup that is operable to read data recorded on an optical disc;
a reference control signal generator (140) for generating a reference control signal using the first control signal and the second control signal; and
a driving signal generator (150) for generating signals to drive the actuator (160) using the first and second control signals and the reference control signal;
**characterised by** further comprising a first control signal protector (120) for preventing the first control signal from being distorted by the reference control signal generator (140); and
a second control signal protector (130) for preventing the second control signal from being distorted by the reference control signal generator (140).

2. The controller as claimed in claim 1, wherein:
the first control signal protector (120) is operable to prevent a voltage of the first control signal from being changed by a first signal output from a first terminal of the reference control signal generator (140), and
the second control signal protector (130) is operable to prevent a voltage of the second control signal from being changed by a second signal output from a second terminal of the reference control signal generator (140).

3. The controller as claimed in claim 2, wherein:
the first control signal protector (120) comprises a first voltage follower (120) having an input connected to the first control signal and an output connected to the first terminal of the reference control signal generator (140), and
the second control signal protector (130) comprises a second voltage follower (130) having an input connected to the second control signal and an output connected to the second terminal of reference control signal generator (140).

4. An optical reproducing apparatus comprising:
a pickup for reading data recorded on an optical disc;
an actuator (160) for adjusting a tilt of the pickup;
a control signal generator (110) for generating a first control signal and a second control signal to control the actuator (160) adjusting the tilt of the pickup;
a reference control signal generator (140) for generating a reference control signal using the first control signal and the second control signal;
a driving signal generator (150) for generating signals to drive the actuator (160) using the first and second control signals and the reference control signal;
**characterised by** further comprising a first control signal protector (120) for preventing the first control signal from being distorted by the reference control signal generator (140); and
a second control signal protector (130) for preventing the second control signal from being distorted by the reference control signal generator (140).

5. The apparatus as claimed in claim 4, wherein:
the first control signal protector (120) is operable to prevent a voltage of the first control signal from being changed by a first signal output from a first terminal of the reference control signal generator (140), and
the second control signal protector (130) is operable to prevent a voltage of the second control signal from being changed by a second signal output from a second terminal of the reference control signal generator (140).

6. The apparatus as claimed in claim 5, wherein:
the first control signal protector (120) comprises a first voltage follower (120) having an input connected to the first control signal and an output connected to the first terminal of the reference control signal generator (140), and
the second control signal protector (130) comprises a second voltage follower (130) having an input connected to the second control signal and an output connected to the second terminal of reference control signal generator (140).

7. An optical reproducing apparatus as claimed in any one of claims 4 to 6, wherein the driving signal generator (150) further comprises:
first, second and third amplifiers (152-1,152-2,152-3) for amplifying the first, second and reference control signals, respectively, and
first, second and third level shifters (154-1, 154-2, 154-3) which are operable to shift a level of the amplified first, second and reference control signals, respectively, to drive the actuator (160).

## Patentansprüche

1. Neigungssteuerung, umfassend:
einen Steuersignalgenerator (110) zum Erzeugen eines ersten Steuersignals und eines zweiten Steuersignals zum Steuern eines Stellglieds (160), das eine Neigung eines zum Lesen von auf einem optischen Datenträger aufgezeichneten Daten betreibbaren Abnehmers justiert;
einen Referenzsteuersignalgenerator (140) zum Erzeugen eines Referenzsteuersignals unter Verwendung des ersten Steuersignals und des zweiten Steuersignals; und
einen Ansteuerungssignalgenerator (150) zum Erzeugen von Signalen zum Ansteuern des Stellglieds (160) unter Verwendung des ersten und des zweiten Steuersignals und des Referenzsteuersignals;
**dadurch gekennzeichnet, daß** sie ferner folgendes umfaßt: eine erste Steuersignal-Schutzvorrichtung (120) zum Verhindern einer Verzerrung des ersten Steuersignals durch den Referenzsteuersignalgenerator (140); und
eine zweite Steuersignal-Schutzvorrichtung (130) zum Verhindern einer Verzerrung des zweiten Steuersignals durch den Referenzsteuersignalgenerator (140).

2. Steuerung nach Anspruch 1, wobei
die erste Steuersignal-Schutzvorrichtung (120) betreibbar ist, um zu verhindern, daß eine Spannung des ersten Steuersignals durch eine erste Signalausgabe aus einem ersten Anschluß des Referenzsteuersignalgenerators (140) verändert wird, und
die zweite Steuersignal-Schutzvorrichtung (130) betreibbar ist, um zu verhindern, daß eine Spannung des zweiten Steuersignals durch eine zweite Signalausgabe aus einem zweiten Anschluß des Referenzsteuersignalgenerators (140) verändert wird.

3. Steuerung nach Anspruch 2, wobei
die erste Steuersignal-Schutzvorrichtung (120) einen ersten Spannungsfolger (120) mit einem mit dem ersten Steuersignal verbundenen Eingang und einem mit dem ersten Anschluß des Referenzsteuersignalgenerators (140) verbundenen Ausgang umfasst und
die zweite Steuersignal-Schutzvorrichtung (130) einen zweiten Spannungsfolger (130) mit einem mit dem zweiten Steuersignal verbundenen Eingang und einem mit dem zweiten Anschluß des Referenzsteuersignalgenerators (140) verbundenen Ausgang umfasst.

4. Optische Wiedergabevorrichtung, umfassend:
einen Abnehmer zum Lesen von auf einem optischen Datenträger aufgezeichneten Daten;
ein Stellglied (160) zum Justieren einer Neigung des Abnehmers;
einen Steuersignalgenerator (110) zum Erzeugen eines ersten Steuersignals und eines zweiten Steuersignals zum Steuern des die Neigung des Abnehmers justierenden Stellglieds (160);
einen Referenzsteuersignalgenerator (140) zum Erzeugen eines Referenzsteuersignals unter Verwendung des ersten Steuersignals und des zweiten Steuersignals;
einen Ansteuerungssignalgenerator (150) zum Erzeugen von Signalen zum Ansteuern des Stellglieds (160) unter Verwendung des ersten und des zweiten Steuersignals und des Referenzsteuersignals;
**dadurch gekennzeichnet, daß** sie ferner folgendes umfaßt: eine erste Steuersignal-Schutzvorrichtung (120) zum Verhindern einer Verzerrung des ersten Steuersignals durch den Referenzsteuersignalgenerator (140); und eine zweite Steuersignal-Schutzvorrichtung (130) zum Verhindern einer Verzerrung des zweiten Steuersignals durch den Referenzsteuersignalgenerator (140).

5. Vorrichtung nach Anspruch 4, wobei
die erste Steuersignal-Schutzvorrichtung (120) betreibbar ist, um zu verhindern, daß eine Spannung des ersten Steuersignals durch eine erste Signalausgabe aus einem ersten Anschluß des Referenzsteuersignalgenerators (140) verändert wird, und
die zweite Steuersignal-Schutzvorrichtung (130) betreibbar ist, um zu verhindern, daß eine Spannung des zweiten Steuersignals durch eine zweite Signalausgabe aus einem zweiten Anschluß des Referenzsteuersignalgenerators (140) verändert wird.

6. Vorrichtung nach Anspruch 5, wobei
die erste Steuersignal-Schutzvorrichtung (120) einen ersten Spannungsfolger (120) mit einem mit dem ersten Steuersignal verbundenen Eingang und einem mit dem ersten Anschluß des Referenzsteuersignalgenerators (140) verbundenen Ausgang umfaßt und
die zweite Steuersignal-Schutzvorrichtung (130) einen zweiten Spannungsfolger (130) mit einem mit dem zweiten Steuersignal verbundenen Eingang und einem mit dem zweiten Anschluß des Referenzsteuersignalgenerators (140) verbundenen Ausgang umfaßt.

7. Optische Wiedergabevorrichtung nach einem der Ansprüche 4 bis 6, wobei der Ansteuerungssignalgenerator (150) ferner folgendes umfaßt:
einen ersten, einen zweiten und einen dritten Verstärker (152-1, 152-2, 152-3) zum Verstärken des ersten, des zweiten bzw. des Referenzsteuersignals und
einen ersten, einen zweiten und einen dritten Pegelumsetzer (154-1, 154-2, 154-3), die betreibbar sind, um einen Pegel des verstärkten ersten, zweiten bzw. Referenzsteuersignals umzusetzen, um das Stellglied (160) anzusteuern.

## Revendications

1. Unité de commande d'inclinaison comprenant :
un générateur de signaux de commande (110) pour générer un premier signal de commande et un second signal de commande afin de commander un actionneur (160) qui règle une inclinaison d'un dispositif de lecture qui est exploitable pour lire des données enregistrées sur un disque optique ;
un générateur de signal de commande de référence (140) pour générer un signal de commande de référence en utilisant le premier signal de commande et le second signal de commande ; et
un générateur de signaux d'entraînement (150) pour générer des signaux servant à entraîner l'actionneur (160) en utilisant les premier et second signaux de commande et le signal de commande de référence ;
**caractérisé par le fait qu'**elle comprend en outre un protecteur de premier signal de commande (120) pour empêcher la déformation du premier signal de commande par le générateur de signal de commande de référence (140) ; et
un protecteur de second signal de commande (130) pour empêcher la déformation du second signal de commande par le générateur de signal de commande de référence (140).

2. Unité de commande selon la revendication 1, dans laquelle :
le protecteur de premier signal de commande (120) est exploitable pour empêcher le changement d'une tension du premier signal de commande par un premier signal sorti par une première borne du générateur de signal de commande de référence (140), et
le protecteur de second signal de commande (130) est exploitable pour empêcher le changement d'une tension du second signal de commande par un second signal sorti par une seconde borne du générateur de signal de commande de référence (140).

3. Unité de commande selon la revendication 2, dans laquelle :
le protecteur de premier signal de commande (120) comprend un premier suiveur de tension (120) ayant une entrée connectée au premier signal de commande et une sortie connectée à la première borne du générateur de signal de commande de référence (140), et
le protecteur de second signal de commande (130) comprend un second suiveur de tension (130) ayant une entrée connectée au second signal de commande et une sortie connectée à la seconde borne du générateur de signal de commande de référence (140).

4. Appareil de reproduction optique comprenant :
un dispositif de lecture pour lire des données enregistrées sur un disque optique ;
un actionneur (160) pour régler une inclinaison du dispositif de lecture ;
un générateur de signaux de commande (110) pour générer un premier signal de commande et un second signal de commande afin de commander l'actionneur (160) qui règle l'inclinaison du dispositif de lecture ;
un générateur de signal de commande de référence (140) pour générer un signal de commande de référence en utilisant le premier signal de commande et le second signal de commande ;
un générateur de signaux d'entraînement (150) pour générer des signaux servant à entraîner l'actionneur (160) en utilisant les premier et second signaux de commande et le signal de commande de référence ;
**caractérisé par le fait qu'**il comprend en outre un protecteur de premier signal de commande (120) pour empêcher la déformation du premier signal de commande par le générateur de signal de commande de référence (140) ; et
un protecteur de second signal de commande (130) pour empêcher la déformation du second signal de commande par le générateur de signal de commande de référence (140).

5. Appareil selon la revendication 4, dans lequel :
le protecteur de premier signal de commande (120) est exploitable pour empêcher le changement d'une tension du premier signal de commande par un premier signal sorti par une première borne du générateur de signal de commande de référence (140), et
le protecteur de second signal de commande (130) est exploitable pour empêcher le changement d'une tension du second signal de commande par un second signal sorti par une seconde borne du générateur de signal de commande de référence (140).

6. Appareil selon la revendication 5, dans lequel :
le protecteur de premier signal de commande (120) comprend un premier suiveur de tension (120) ayant une entrée connectée au premier signal de commande et une sortie connectée à la première borne du générateur de signal de commande de référence (140), et
le protecteur de second signal de commande (130) comprend un second suiveur de tension (130) ayant une entrée connectée au second signal de commande et une sortie connectée à la seconde borne du générateur de signal de commande de référence (140).

7. Appareil de reproduction optique selon l'une quelconque des revendications 4 à 6, dans lequel le générateur de signaux d'entraînement (150) comprend en outre :
des premier, deuxième et troisième amplificateurs (152-1, 152-2, 152-3) pour amplifier les premier et second signaux de commande ainsi que le signal de commande de référence, respectivement, et
des premier, deuxième et troisième déphaseurs (154-1, 154-2, 154-3) qui sont exploitables pour décaler un niveau des premier et second signaux de commande et du signal de commande de référence amplifiés, respectivement, afin d'entraîner l'actionneur (160).
